# EUROPEAN PATENT APPLICATION

(11) **EP 4 047 474 A1**
(43) Date of publication of application: **24.08.2022**
(21) Application number: 22150572.0
(22) Date of filing: 07.01.2022
(51) Int. Cl.: G06F 8/36, G06N 3/10, G06N 20/00, G06F 8/00, G06F 16/907

(54) **METHOD FOR ANNOTATING DATA, RELATED APPARATUS AND COMPUTER PROGRAM PRODUCT**

(30) Priority: 28.04.2021 CN 202110465098
(71) Applicant: BEIJING BAIDU NETCOM SCIENCE AND TECHNOLOGY CO. LTD., 100085 Beijing (CN)
(72) Inventor: ZHANG, Weipei, Beijing, 100085 (CN); HONG, Zhiyuan, Beijing, 100085 (CN)
(74) Representative: Nederlandsch Octrooibureau

(57) **Abstract**

The present disclosure provides a method and apparatus for annotating data, an electronic device, a computer readable storage medium and a computer program product, and relates to the field of artificial intelligence technology such as data annotation and deep learning. A specific implementation of the method comprises: acquiring an original annotation algorithm corresponding to to-be-annotated data, and then extracting, from the original annotation algorithm, an anchor point used to mark a modifiable part of a code corresponding to a preset function in a code segment of the original annotation algorithm; acquiring an annotation requirement corresponding to the to-be-annotated data, and determining a target anchor point corresponding to the annotation requirement; modifying an implementation parameter of the target anchor point based on the annotation requirement, to generate a target annotation algorithm; and finally processing the to-be-annotated data using the target annotation algorithm, to obtain an annotation result.

## Description

### TECHNICAL FIELD

The present disclosure relates to the field of data processing technology, particularly to the field of artificial intelligence technology such as data annotation and deep learning, and particularly to a method and apparatus for annotating data, an electronic device, a computer readable storage medium and a computer program product.

### BACKGROUND

The artificial intelligence industry is receiving more and more attention in modern society, but in this industry, the data annotation work of sample data still belongs to the labor-intensive industry, and still needs to realized manually, thus being in an extensive state for a long time.

In the prior art, a recognition algorithm related to data annotation is often adopted to preprocess and pre-annotate data, such that a user annotate the data according to the results of the preprocessing and the pre-annotating, to implement the improvement of the efficiency of the manual data annotation.

### SUMMARY

Embodiments of the present disclosure propose a method and apparatus for annotating data, an electronic device, a computer readable storage medium and a computer program product.

In a first aspect, some embodiments of the present disclosure provide a method for annotating data, the method incudes: acquiring an original annotation algorithm corresponding to to-be-annotated data, and extracting an anchor point in the original annotation algorithm, the anchor point being used to mark a modifiable part of codes corresponding to a preset function in a code segment of the original annotation algorithm; acquiring an annotation requirement corresponding to the to-be-annotated data, and determining a target anchor point corresponding to the annotation requirement; modifying an implementation parameter of the target anchor point based on the annotation requirement, to generate a target annotation algorithm; and processing the to-be-annotated data using the target annotation algorithm, to obtain an annotation result.

In a second aspect, some embodiments of the present disclosure provide an apparatus for annotating data, the apparatus includes: an original annotation algorithm and anchor point extracting unit, comprising: an original annotation algorithm extracting subunit, configured to acquire an original annotation algorithm corresponding to to-be-annotated data; and an anchor point extracting subunit, configured to extract an anchor point in the original annotation algorithm, the anchor point being used to mark a modifiable part of codes corresponding to a preset function in a code segment of the original annotation algorithm; a target anchor point determining unit, configured to acquire an annotation requirement corresponding to the to-be-annotated data, and determine a target anchor point corresponding to the annotation requirement; an annotation algorithm generating unit, configured to modify an implementation parameter of the target anchor point based on the annotation requirement, to generate a target annotation algorithm; and an annotation result generating unit, configured to process the to-be-annotated data using the target annotation algorithm, to obtain an annotation result.

In a third aspect, some embodiments of the present disclosure provide an electronic device, the electronic device includes: at least one processor; and a storage device, communicated with the at least one processor, where the storage device stores instructions executable by the at least one processor, and the instructions, when executed by the at least one processor, to enable the at least one processor to perform the method for annotating data according to any one of implementations in the first aspect.

In a fourth aspect, some embodiments of the present disclosure provide a non-transitory computer readable storage medium, storing a computer instruction, wherein the computer instruction, when executed by a processor, cause the processor to perform the method for annotating data according to any one of implementations in the first aspect.

In a fifth aspect, some embodiments of the present disclosure provide a computer program product, comprising a computer program thereon, where the computer program, when executed by a processor, cause the processor to perform the method for annotating data according to any one of implementations in the first aspect.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

After reading detailed descriptions of non-limiting embodiments given with reference to the following accompanying drawings, other features, objectives and advantages of the present disclosure will be more apparent.
Fig. 1 is a diagram of an exemplary system architecture in which embodiments of the present disclosure may be applied;
Fig. 2 is a flowchart of a method for annotating data provided by an embodiment of the present disclosure;
Fig. 3 is a flowchart of another method for annotating data provided by an embodiment of the present disclosure;
Fig. 4 is a schematic effect diagram of the method for annotating data in an application scenario, provided by an embodiment of the present disclosure;
Fig. 5 is a structure block diagram of an apparatus for annotating data provided by an embodiment of the present disclosure; and
Fig. 6 is a schematic structure diagram of an electronic device provided by an embodiment of the present disclosure and adapted to perform a method for annotating data.

### DETAILED DESCRIPTION OF EMBODIMENTS

Exemplary embodiments of the present disclosure are described below in combination with the accompanying drawings, and various details of embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description. It should be noted that embodiments in the present disclosure and the features in the embodiments may be combined with each other on a non-conflict basis.

In addition, the acquisition, storage, application, etc. of the personal information of a user (e.g., when to-be-annotated data refers to a face image containing the face information of the user) that are involved in the technical solution involved in embodiments of the present disclosure are all comply with the provisions of the relevant laws and regulations, and do not violate the public order and good customs.

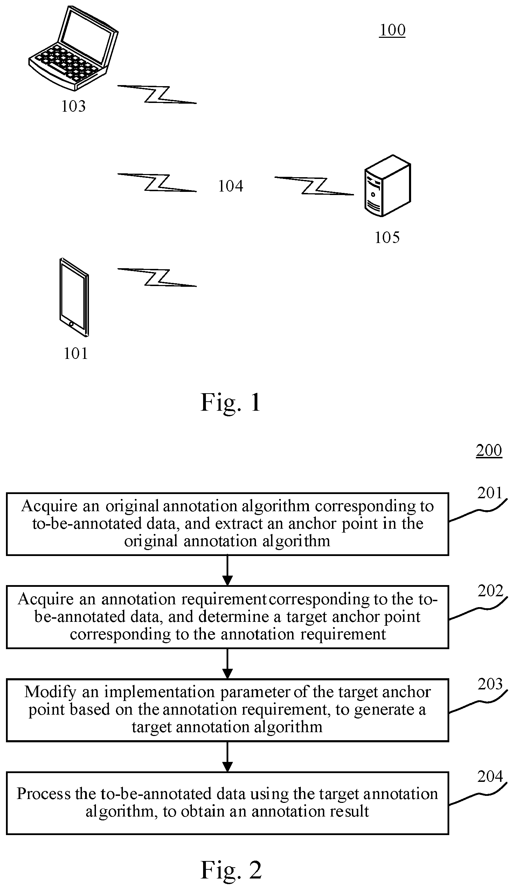

Fig. 1 illustrates an exemplary system architecture 100 in which an embodiment of a method for annotating data, an apparatus for annotating data, an electronic device and a computer readable storage medium according to embodiments of the present disclosure may be applied.

As shown in Fig. 1, the system architecture 100 may include terminal device(s) 101, 102 and/or 103, a network 104 and a server 105. The network 104 serves as a medium providing a communication link between the terminal device(s) 101, 102 and/or 103 and the server 105. The network 104 may include various types of connections, for example, wired or wireless communication links, or optical fiber cables.

A user may use the terminal device(s) 101, 102 and/or 103 to interact with the server 105 via the network 104, to receive or send a message, etc. On the terminal devices 101, 102 and 103 and the server 105, various applications for implementing an information communication therebetween (e.g., a data annotation application, a model training application, and/or an instant communication application) may be installed.

The terminal devices 101, 102 and 103 and the server 105 may be hardware or software. When being the hardware, the terminal devices 101, 102 and 103 may be various electronic devices having a display screen, the electronic devices including, but not limited to, a smartphone, a tablet computer, a laptop portable computer, a desktop computer, and the like. When being the software, the terminal devices 101, 102 and 103 may be installed in the above listed electronic devices. The terminal devices 101, 102 and 103 may be implemented as a plurality of pieces of software or a plurality of software modules, or may be implemented as a single piece of software or a single software module, which will not be specifically limited here. When being the hardware, the server 105 may be implemented as a distributed server cluster composed of a plurality of servers, or may be implemented as a single server. When being the software, the server 105 may be implemented as a plurality of pieces of software or a plurality of software modules, or may be implemented as a single piece of software or a single software module, which will not be specifically limited here.

The server 105 may provide various services through various built-in applications. Taking a data annotation application as an example, the data annotation application may provide an annotation for to-be-annotated data uploaded by the user, the server 105 may realize the following effects when running the data annotation application. First, after receiving to-be-annotated data from the terminal device(s) 101, 102 and/or 103 through the network 104, the server 105 acquires an original annotation algorithm corresponding to the to-be-annotated data, and extracts an anchor point in the original annotation algorithm. Here, the anchor point is used to mark a modifiable part of codes corresponding to a preset function in a code segment of the original annotation algorithm. Then, the server 105 acquires an annotation requirement corresponding to the to-be-annotated data, and determines a target anchor point corresponding to the annotation requirement. Further, the server 105 modifies an implementation parameter of the target anchor point based on the annotation requirement, to generate the target annotation algorithm. The server 105 processes the to-be-annotated data using the target annotation algorithm, to obtain an annotation result.

It should be pointed out that, in addition to being acquired from the terminal device(s) 101, 102 and/or 103 through the network 104, the to-be-annotated data may be pre-stored locally in the server 105 in various ways. Therefore, when detecting that these data is already stored locally (e.g., starting to process a to-be-processed data annotation task retained previously), the server 105 may choose to directly acquire these data locally. In this case, the exemplary system architecture 100 may alternatively not include the terminal device(s) 101, 102, 103 and the network 104.

Since data annotation process requires more computing resources and strong computing capability. Therefore, the method for annotating data provided in the subsequent embodiments of the present disclosure is generally performed by the server 105 having a strong computing capability and more computing resources, and correspondingly, the apparatus for annotating data is also generally provided in the server 105. However, it should also be pointed out that, when having computing capabilities and computing resources that satisfy the requirements, the terminal device(s) 101, 102 and/or 103 may complete, through the data annotation application installed on the terminal device(s) 101, 102 and/or 103, the above computations performed by the server 105, thereby outputting the same result as that of the server 105. In particular, in the case where a plurality of terminal devices having different computing capabilities are present at the same time, when the data annotation application determines that a terminal device having the data annotation application has a strong computing capability and more remaining computing resources, the terminal device may be caused to perform the above computations, which appropriately reduces the computation pressure of the server 105, and correspondingly, the apparatus for annotating data may alternatively provided in the terminal device(s) 101, 102 and/or 103.

It should be appreciated that the numbers of the terminal devices, the networks and the servers in Fig. 1 are merely illustrative. Any number of terminal devices, networks and servers may be provided based on actual requirements.

Referring to Fig. 2, Fig. 2 is a flowchart of a method for annotating data provided by an embodiment of the present disclosure. Here, a flow 200 includes the following steps:

Step 201, acquiring an original annotation algorithm corresponding to to-be-annotated data, and extracting an anchor point in the original annotation algorithm.

In this embodiment, an executing body (e.g., the server 105 shown in Fig. 1) of the method for annotating data acquires the original annotation algorithm corresponding to to-be-annotated data after determining the to-be-annotated data, and determines the anchor point(s) in the original annotation algorithm. Here, an anchor point is used to mark a modifiable part of codes corresponding to a preset function in a code segment of the original annotation algorithm.

Generally, the original annotation algorithm is related to the type of the to-be-annotated data and the annotation purpose. For example, when the to-be-annotated data is image data, the annotation purpose may be to annotate or segment specific content (e.g., a face or a vehicle) in the image data. In this case, the original annotation algorithm may be a semantic segmentation neural network. When the to-be-annotated data is audio information, the annotation purpose may be to generate a feature vector of the audio information to facilitate the subsequent classification for the audio information. In this case, the original annotation algorithm may be a convolutional neural network, to implement that a tag vector of the audio information is generated according to the convolutional neural network, thereby completing the annotation for the audio information.

It should be noted that the to-be-annotated data may be directly acquired by the above executing body from a local storage device, or from a non-local storage device (e.g., the terminal device(s) 101, 102 and/or 103 shown in Fig. 1). The local storage device may be a data storage module (e.g., a server hard disk) provided in the above executing body, and in this case, the to-be-annotated data may be read quickly locally. The non-local storage device may alternatively be any other electronic device (e.g., some user terminals) provided to store data, and in this case, the above executing body may acquire desired to-be-annotated data by sending an acquisition command to the other electronic device.

Here, in order to better implement the data annotation, the original annotation algorithm corresponding to the to-be-annotated data is generally stored locally in the above executing body, such that the above executing body may quickly call and adapt an original annotation algorithm according to the content of the to-be-annotated data.

Further, in order to facilitate the analysis on the original annotation algorithm and the update and configuration of the obtained anchor point, the anchor point(s) in the original annotation algorithm is generally determined through the following steps. After acquiring the original annotation algorithm, the above executing body performs a corresponding analysis locally, to determine the anchor point(s) existing in the original annotation algorithm. In practice, the analysis and marking task for the anchor point(s) in the original annotation algorithm may alternatively be performed by another executing body rather than the above executing body. After the marking for the anchor point(s) in the original annotation algorithm is completed, the related mark information is made corresponding to the original annotation algorithm and then fed back to the above executing body, to extend the source of the anchor point(s).

Step 202, acquiring an annotation requirement corresponding to the to-be-annotated data, and determining a target anchor point corresponding to the annotation requirement.

In this embodiment, after the original annotation algorithm corresponding to the to-be-annotated data and the anchor point(s) in the original algorithm are determined based on step 201, the target anchor point in the original annotation algorithm is determined, the target anchor point realizing a function corresponding to the annotation requirement.

Here, the annotation requirement may refer to an annotation purpose such as a purpose of determining a specific object in an image, a purpose of determining feature information of the image, a purpose of determining five-sensory-organ position information in a face image, and a purpose of extracting specific information from an audio clip.

In practice, generally, after determining anchor point(s) in the original annotation algorithm in step 201, the above executing body marks the anchor point(s) according to the function(s) corresponding to the anchor point(s), and then provides a feedback to the provider of the to-be-annotated data, such that the provider selects a corresponding function mark and target anchor point according to the mark requirement of the provider.

Step 203, modifying an implementation parameter of the target anchor point based on the annotation requirement, to generate a target annotation algorithm.

In this embodiment, after it is determined that the target anchor point exists in the original algorithm, the implementation parameter in the codes corresponding to the target anchor point is modified correspondingly according to the content corresponding to the annotation requirement. For example, when the to-be-annotated data refers to an image, the parameter required to be modified may refer to the contents such as the size of the recognition range, precision of the recognition content, and the number of concurrency of data, such that the codes corresponding to the target anchor point may be adapted to the annotation requirement of the to-be-annotated data, thereby obtaining the target annotation algorithm that may be used to satisfy the annotation requirement.

Step 204, processing the to-be-annotated data using the target annotation algorithm, to obtain an annotation result.

In this embodiment, after the target annotation algorithm obtained after the modification is acquired based on step 203, the target annotation algorithm is used to process the to-be-annotated data, to complete a data annotation task satisfying the annotation requirement and obtain a final annotation result.

According to the method for annotating data provided in an embodiment of the present disclosure, the function and codes of an original algorithm may be analyzed in advance, to determine the function of each part of the original algorithm and a modifiable part of codes corresponding to this function. For each modifiable part of the codes, a corresponding anchor point(s) may be added. Subsequently, after the to-be-annotated data is acquired, the corresponding original annotation algorithm may be determined according to the to-be-annotated data, a corresponding target anchor point may be determined according to the annotation requirement of the to-be-annotated data, and the content corresponding to the target anchor point may be modified according to the implementation parameter of the annotation requirement, to obtain the target annotation algorithm that may be adapted to the annotation requirement, thereby improving the generality of the original annotation algorithm for different to-be-annotated data in different application scenarios and the configuration efficiency of the algorithm for the different to-be-annotated data.

In some alternative implementations of this embodiment, the modifying an implementation parameter of the target anchor point based on the annotation requirement includes: acquiring modifiable codes corresponding to the target anchor point, and generating prompt information of the modifiable codes, the prompt information being used to prompt a function of each part of the modifiable codes; presenting the modifiable codes and the prompt information; and receiving parameter modification information corresponding to the modifiable codes, and modifying the modifiable codes according to the parameter modification information.

Particularly, after the target anchor point corresponding to the annotation requirement is acquired, modifiable codes corresponding to the target anchor point is extracted, and the prompt information of the modifiable codes is generated. The prompt information is used to prompt the function of the each part of the modifiable codes. For example, the prompt information may be used to indicate the corresponding function that the modifiable codes may realize, the meanings corresponding to respective characters and parameters in the codes, and the effect that may be generated after the codes are modified. The modifiable codes corresponding to the target anchor point and the prompt information are presented, such that the user may configure and generate the parameter modification information corresponding to the modifiable codes according to the modifiable codes and the corresponding prompt information. After receiving the parameter modification information corresponding to the modifiable codes, the above executing body modifies the modifiable codes according to the parameter modification information, which is conducive to helping the user, who wishes to realize the data annotation function, to modify the function and the parameter configuration by means of the prompt information, so as to improve the efficiency and quality of the obtained target annotation algorithm.

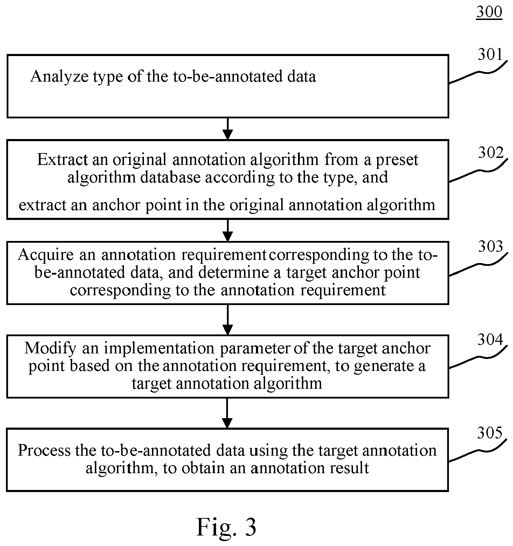

Referring to Fig. 3, Fig. 3 is a flowchart of another method for annotating data provided by an embodiment of the present disclosure. Here, a flow 300 includes the following steps:

Step 301, analyzing a type of the to-be-annotated data.

In this embodiment, after the to-be-annotated data is acquired, the type of the to-be-annotated data is analyzed to realize the type of the to-be-annotated data. The type includes at least one of: image type, audio type, or text type.

Step 302, extracting an original annotation algorithm from a preset algorithm database according to the type of the to-be-annotated data, and extracting an anchor point in the original annotation algorithm.

In this embodiment, the type of the to-be-annotated data determined in step 301 is acquired, and an algorithm corresponding to the type of the to-be-annotated data is extracted from the preset algorithm database according to the type of the to-be-annotated data. According to types of data and different annotation requirements, corresponding annotation algorithms may be preset in the algorithm database, so as to quickly perform algorithm matching subsequently when content such as the type of the to-be-annotated data and the annotation requirement is acquired.

Further, annotation algorithms in the algorithm database may be customized based on the operator of the above executing body, or different annotated data in historical data and annotation requirements in the historical data may be associatively stored with the corresponding target annotation algorithms, so as to conducive to determining an approximate target annotation algorithm when the same annotated data and annotation requirement are subsequently received or the annotated data and the annotation requirement that have similarities with the stored annotated data and annotation requirements in the historical data exceeding a threshold condition are subsequently received, thereby improving the efficiency. Alternatively, the annotation algorithms in the algorithm database may be supplemented and updated through an upload of another user, to enrich the number and quality of the annotation algorithms stored in the algorithm database, thereby improving the usage value of the algorithm database.

On this basis, when the algorithm database is constructed, corresponding annotation information may be correspondingly added to the annotation algorithms in the algorithm database according to the contents such as a scenario where an annotation algorithm is used, a type of to-be-annotated data, a processing capability, the number of concurrency, and a realizable annotation function, such that a corresponding original annotation algorithm is independently selected and correlatively matched through a user instruction, or according to the parameter of the to-be-annotated data uploaded by the user and the content of the annotation requirement, thereby improving the user experience.

Step 303, acquiring an annotation requirement corresponding to the to-be-annotated data, and determining a target anchor point corresponding to the annotation requirement.

Step 304, modifying an implementation parameter of the target anchor point based on the annotation requirement, to generate a target annotation algorithm.

Step 305, processing the to-be-annotated data using the target annotation algorithm, to obtain an annotation result.

The above steps 303-305 are consistent with the steps 202-204 shown in Fig. 2. For the contents of the same parts, reference is made to the corresponding parts in the above embodiment, which will not be repeatedly described here.

In this embodiment, on the basis of the above embodiment corresponding to Fig. 2, after a plurality of annotation algorithms are stored in the way in which the algorithm database is constructed, a corresponding initial annotation algorithm is determined according to the type of the to-be-annotated data, to improve the annotation processing capability when many types of to-be-annotated data and annotation requirements in many aspects are handled according to the method for annotating data.

In some alternative implementations of this embodiment, the extracting an original annotation algorithm from a preset algorithm database according to the type of the to-be-annotated data includes: presenting one or more recommended algorithm(s) corresponding to the type; and determining, in response to receiving a selection on a recommended algorithm, the recommended algorithm determined by the selection information as the original annotation algorithm.

Particularly, after the type of the to-be-annotated data is acquired, during extracting the original annotation algorithm corresponding to the type from the preset algorithm database, one or more recommended algorithms corresponding to the type of the to-be-annotated data may be simultaneously extracted from the algorithm database, for the user to select an appropriate original annotation algorithm according to an actual requirement of himself. After the selection on a recommended algorithm in the one or more recommended algorithm is received from the user, the recommended algorithm corresponding to the selection is determined as the original annotation algorithm, so as to provide the user with an original annotation algorithm more conforming to the actual requirement, thereby improving the quality of the acquired original annotation algorithm.

On the basis of any one of the above embodiments, after the target annotation algorithm is generated, the method further includes: performing, in response to acquiring a instruction for preprocessing the to-be-annotated data, a corresponding preprocessing operation on the to-be-annotated data according to the instruction for preprocessing, the preprocessing operation including at least one of: deduplication, deviation correction, or chroma adjustment.

Particularly, after the target annotation algorithm is acquired, if the instruction for preprocessing the to-be-annotated data is received, the to-be-annotated data is processed according to the instruction for preprocessing, to be adapted to the target annotation algorithm. The preprocessing operation includes at least one of the deduplication, the deviation correction, or the chroma adjustment. The to-be-annotated data is processed through the preprocessing, to be adapted to the target annotation algorithm, such that the target annotation algorithm may better annotate the to-be-annotated data to obtain a good-quality annotation result.

In practice, the preprocessing on the to-be-annotated data may alternatively be correspondingly set according to the type of the to-be-annotated data. For example, when the to-be-annotated data refers to image data, the corresponding preprocessing may include at least one of: element enclosing or frame segmentation. Element enclosing refers to removing the holes in the target image and exclude small black holes (black areas).

Further, in order to improve the efficiency of the data annotation, especially when the original annotation algorithm is acquired based on the algorithm database (as shown in the above embodiment corresponding to Fig. 3) and when the user has the same annotation requirement for the to-be-annotated data of the same type, then after the annotation result is obtained, the method for annotating data further includes: generating a function tag of the target annotation algorithm according to the annotation requirement; and generating, based on the function tag, a table recording relationships between respective target annotation algorithms corresponding to different annotation requirements and modification information relative to the original annotation algorithm in the respective target annotation algorithms.

Particularly, after the annotation result of the annotation requirement corresponding to the to-be-annotated data is acquired, the function tag of the acquired target annotation algorithm is generated based on the annotated data used this time and the annotation requirement corresponding to the annotated data, and subsequently, the table recording the relationship between the target annotation algorithm corresponding to the annotation requirement and modification information in the target annotation algorithm relative to the original annotation algorithm. As such, according to the table, the target annotation algorithm corresponding to the annotation requirement is acquired and the modified part in the target annotation algorithm with respect to the original annotation algorithm may be repeatedly configured for subsequent call of the algorithm database, thereby improving the efficiency of the subsequent call with respect to the same annotation requirement and the efficiency of construction of the algorithm database.

Further, in order to facilitate the use by the user, the table recording the relationships may further include the content of the to-be-annotated data and the type of the to-be-annotated data, to provide more reference information, which helps in subsequently acquiring and configuring the target annotation algorithm based on the contents in the relationship form.

For a deeper understanding, an embodiment of the present disclosure further provides a detailed application scenario. In the scenario, the executing body of the method for annotating data performs corresponding processing after receiving the to-be-annotated data in the form of an image that is uploaded by a user, to obtain an annotation result. The process is as follows:

After the to-be-annotated data uploaded by the user is received, an analysis is performed on the type of the to-be-annotated data. For example, in this application scenario, it is determined that the type of the to-be-annotated data refers to "image type."

A semantic segmentation neural network corresponding to the to-be-annotated data is acquired as an original annotation algorithm, and an anchor point(s) in the original annotation algorithm is extracted.

An annotation requirement "annotating a face image in the image" corresponding to the to-be-annotated data is acquired, and a target anchor point corresponding to the annotation requirement is determined.

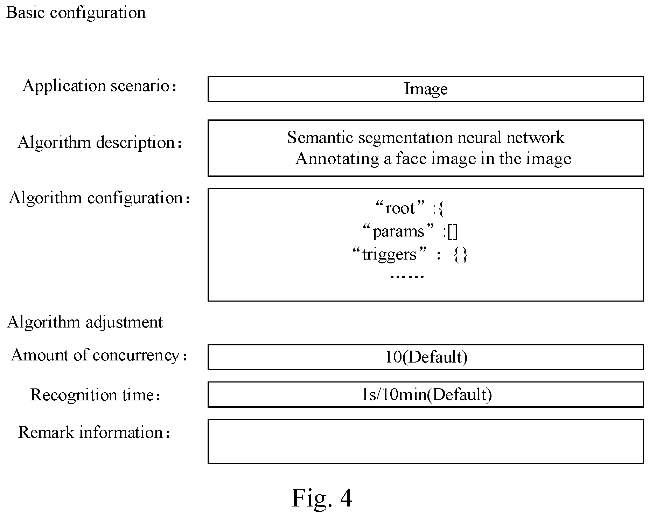

Modifiable codes corresponding to the target anchor point is acquired and presented, and the modifiable codes are presented. For the effect of the presentation, reference may be made to the effect shown in Fig. 4, in which the content of the modifiable codes corresponding to the target anchor point are presented in the algorithm configuration information box.

The user directly modifies the content of the algorithm configuration part correspondingly through the interface shown in Fig. 4, to complete the configuration or modification for the modifiable codes. After receiving the corresponding modified content (parameter modification information), the executing body in embodiments of the present disclosure modifies the modifiable codes correspondingly, and may further modify the number of concurrency and recognition time of the target annotation algorithm in the same way correspondingly, to generate the final target annotation algorithm.

After the target annotation algorithm is obtained, the to-be-annotated data is processed using the target annotation algorithm, to obtain a final annotation result.

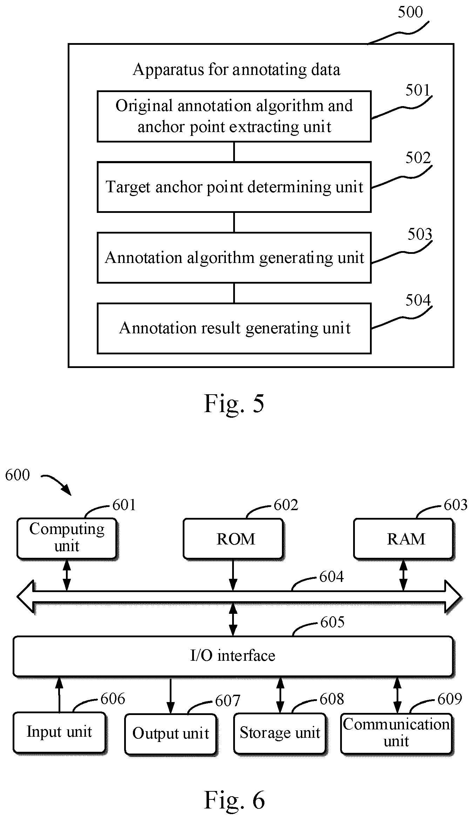

Further referring to Fig. 5, as an implementation of the method shown in the above drawings, an embodiment of the present disclosure provides an apparatus for annotating data. The embodiment of the apparatus corresponds to the embodiment of the method shown in Fig. 2, and the apparatus may be applied in various electronic devices.

As shown in Fig. 5, the apparatus 500 for annotating data in this embodiment may include: an original annotation algorithm and anchor point extracting unit 501, a target anchor point determining unit 502, an annotation algorithm generating unit 503 and an annotation result generating unit 504. Here, the original annotation algorithm and anchor point extracting unit 501 includes: an original annotation algorithm extracting subunit, configured to acquire an original annotation algorithm corresponding to to-be-annotated data; and an anchor point extracting subunit, configured to extract an anchor point in the original annotation algorithm. Here, the anchor point is used to mark a modifiable part of codes corresponding to a preset function in a code segment of the original annotation algorithm. The target anchor point determining unit 502 is configured to acquire an annotation requirement corresponding to the to-be-annotated data, and determine a target anchor point corresponding to the annotation requirement. The annotation algorithm generating unit 503 is configured to modify an implementation parameter of the target anchor point based on the annotation requirement, to generate a target annotation algorithm. The annotation result generating unit 504 is configured to process the to-be-annotated data using the target annotation algorithm, to obtain an annotation result.

In this embodiment, for processes of the original annotation algorithm and anchor point extracting unit 501, the target anchor point determining unit 502, the annotation algorithm generating unit 503 and the annotation result generating unit 504 in the apparatus 500 for annotating data, and their technical effects, reference may be respectively made to relative descriptions of steps 201-204 in the corresponding embodiment of Fig. 2, which will not be repeatedly described here.

In some alternative implementations of this embodiment, the original annotation algorithm extracting subunit includes: a type analyzing module, configured to analyze a type of to-be-annotated data, the type comprising at least one of: image type, audio type, or text type; and an original annotation algorithm extracting module, configured to extract the original annotation algorithm from a preset algorithm database according to the type of the to-be-annotated data.

In some alternative implementations of this embodiment, the original annotation algorithm extracting module includes: a recommendation algorithm presenting submodule, configured to present one or more recommended algorithms corresponding to the type of the to-be-annotated data; and an original annotation algorithm determining submodule, configured to determine, in response to receiving a selection on a recommended algorithm, the recommended algorithm determined by the selection as the original annotation algorithm.

In some alternative implementations of this embodiment, the annotation algorithm generating unit 503 includes: a prompt information generating subunit, configured to acquire modifiable codes corresponding to the target anchor point, and generate prompt information of the modifiable codes, the prompt information being used to prompt a function of each part of the modifiable codes; a modifiable content presenting subunit, configured to present the modifiable codes and the prompt information; and a code modification subunit, configured to receive parameter modification information corresponding to the modifiable codes, and modify the modifiable codes according to the parameter modification information. The annotation algorithm generating unit is further configured to generate the target annotation algorithm according to a result after the modifiable codes in the original annotation algorithm is modified.

In some alternative implementations of this embodiment, the apparatus 500 for annotating data further includes: a data preprocessing unit, configured to perform, in response to acquiring an instruction for preprocessing the to-be-annotated data, a corresponding preprocessing operation on the to-be-annotated data according to the instruction for preprocessing, the preprocessing operation comprising at least one of: deduplication, deviation correction, or chroma adjustment.

In some alternative implementations of this embodiment, the apparatus 500 for annotating data further includes: a function tag generating unit, configured to generate a function tag of the target annotation algorithm according to the annotation requirement; and a relationship form generating unit, configured to generate, based on the function tag, a table recording relationships between respective target annotation algorithms corresponding to different annotation requirements and modification information in the respective target annotation algorithms relative to the original annotation algorithm.

This embodiment exists as an apparatus embodiment corresponding to the above method embodiment. According to the apparatus for annotating data provided in this embodiment, the function and codes of an original algorithm may be analyzed in advance, to determine the function of each part of the original algorithm and a modifiable part of codes corresponding to this function. For each modifiable part, a corresponding anchor point may be added. Subsequently, after the to-be-annotated data is acquired, the corresponding original annotation algorithm may be determined according to the to-be-annotated data, the corresponding target anchor point may be determined according to the annotation requirement of the to-be-annotated data, and the content corresponding to the target anchor point may be modified according to the implementation parameter of the annotation requirement, to obtain the target annotation algorithm that may be adapted to the annotation requirement, thereby improving the generality of the original annotation algorithm for different to-be-annotated data in different application scenarios and the configuration efficiency of the algorithm for the different to-be-annotated data.

According to an embodiment of the present disclosure, an electronic device, a readable storage medium, and a computer program product are provided.

Fig. 6 is a schematic block diagram of an exemplary electronic device 600 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the device 600 may include a computing unit 601, which may execute various appropriate actions and processes in accordance with a computer program stored in a read-only memory (ROM) 602 or a computer program loaded into a random-access memory (RAM) 603 from a storage unit 608. The RAM 603 may alternatively store various programs and data required by operations of the device 600. The computing unit 601, the ROM 602 and the RAM 603 are connected to each other through a bus 604. An input/output (I/O) interface 605 is also connected to the bus 604.

Multiple components of the device 600 are connected to the I/O interface 605, and include: an input unit 606, such as a keyboard and a mouse; an output unit 607, such as various types of displays and a speaker; a storage unit 608, such as a magnetic disk and an optical disk; and a communication unit 609, such as a network card, a modem and a wireless communication transceiver. The communication unit 609 allows the device 600 to exchange information or data with other devices through a computer network, such as the Internet and/or various telecommunications networks.

The computing unit 601 may be various general-purpose and/or specific-purpose processing components having processing and computing capabilities. Some examples of the computing unit 601 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 601 performs various methods and processing described above, such as the method for annotating data. For example, in some embodiments, the method for annotating data may be implemented as a computer software program, which is tangibly included in a machine-readable medium, such as the storage unit 608. In some embodiments, part or all of the computer program may be loaded and/or installed on the device 600 through the ROM 602 and/or the communication unit 609. When the computer program is loaded into the RAM 603 and executed by the computing unit 601, one or more steps of the method for annotating data described above may be performed. Alternatively, in other embodiments, the computing unit 601 may be configured to perform the method for annotating data in any other appropriate manner (such as through firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method for annotating data in embodiments of the disclosure may be written in any combination of one or more programming languages. These program codes may be provided to a processor or controller of a general-purpose computer, specific-purpose computer or other programmable apparatus for annotating data, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, also known as cloud computing server or virtual machine, which is a host product in the cloud computing service system, to solve the defects of difficult management and weak business scalability in traditional physical host and virtual private server (VPS) services. Servers can also be divided into distributed system servers or servers combined with blockchain. According to the technical solution in embodiments of the present disclosure, the function and codes of an original algorithm may be analyzed in advance, to determine the function of each part of the original algorithm and a modifiable part of codes corresponding to this function. For each modifiable part, a corresponding anchor point may be added. Subsequently, after to-be-annotated data is acquired, a corresponding original annotation algorithm may be determined according to the to-be-annotated data, a corresponding target anchor point may be determined according to an annotation requirement of the to-be-annotated data, and the content corresponding to the target anchor point may be modified according to an implementation parameter of the annotation requirement, to obtain a target annotation algorithm that may be adapted to the annotation requirement, thereby improving the generality of the original annotation algorithm for different to-be-annotated data in different application scenarios and the configuration efficiency of the algorithm for the different to-be-annotated data.

It should be appreciated that the steps of reordering, adding or deleting may be executed using the various forms shown above. For example, the steps described in embodiments of the disclosure may be executed in parallel or sequentially or in a different order, so long as the expected results of the technical solutions provided in embodiments of the disclosure may be realized, and no limitation is imposed herein.

The above specific implementations are not intended to limit the scope of the disclosure. It should be appreciated by those skilled in the art that various modifications, combinations, sub-combinations, and substitutions may be made depending on design requirements and other factors. Any modification, equivalent and modification that fall within the spirit and principles of the disclosure are intended to be included within the scope of the disclosure.

## Claims

1. A method for annotating data, comprising:
acquiring (201) an original annotation algorithm corresponding to to-be-annotated data, and extracting an anchor point in the original annotation algorithm, the anchor point being used to mark a modifiable part of codes corresponding to a preset function in a code segment of the original annotation algorithm;
acquiring (202) an annotation requirement corresponding to the to-be-annotated data, and determining a target anchor point corresponding to the annotation requirement;
modifying (203) an implementation parameter of the target anchor point based on the annotation requirement, to generate a target annotation algorithm; and
processing (204) the to-be-annotated data using the target annotation algorithm, to obtain an annotation result.

2. The method according to claim 1, wherein the acquiring (201) an original annotation algorithm corresponding to to-be-annotated data comprises:
analyzing (301) a type of the to-be-annotated data, the type comprising at least one of: image type, audio type, or text type; and
extracting (302) the original annotation algorithm from a preset algorithm database according to the type of the to-be-annotated data.

3. The method according to claim 2, wherein the extracting (302) the original annotation algorithm from a preset algorithm database according to the type of the to-be-annotated data comprises:
presenting one or more recommended algorithms corresponding to the type of the to-be-annotated data; and
determining, in response to receiving a selection on a recommended algorithm, the recommended algorithm determined by the selection as the original annotation algorithm.

4. The method according to claim 1, wherein the modifying (203) an implementation parameter of the target anchor point based on the annotation requirement comprises:
acquiring modifiable codes corresponding to the target anchor point, and generating prompt information of the modifiable codes, the prompt information being used to prompt a function of each part of the modifiable codes;
presenting the modifiable codes and the prompt information; and
receiving parameter modification information corresponding to the modifiable codes, and modifying the modifiable codes according to the parameter modification information.

5. The method according to claim 1, wherein after the target annotation algorithm is generated, the method further comprises:
in response to acquiring an instruction for preprocessing the to-be-annotated data, performing a corresponding preprocessing operation on the to-be-annotated data according to the instruction for preprocessing, the preprocessing operation comprising at least one of: deduplication, deviation correction, or chroma adjustment.

6. The method according to any one of claims 1-5, further comprising:
generating a function tag of the target annotation algorithm according to the annotation requirement; and
generating, based on the function tag, a table recording relationships between respective target annotation algorithms corresponding to different annotation requirements and modification information in the respective target annotation algorithms relative to the original annotation algorithm.

7. An apparatus for annotating data, comprising:
an original annotation algorithm and anchor point extracting unit (501), comprising: an original annotation algorithm extracting subunit, configured to acquire (201) an original annotation algorithm corresponding to to-be-annotated data; and an anchor point extracting subunit, configured to extract an anchor point in the original annotation algorithm, the anchor point being used to mark a modifiable part of codes corresponding to a preset function in a code segment of the original annotation algorithm;
a target anchor point determining unit (502), configured to acquire (202) an annotation requirement corresponding to the to-be-annotated data, and determine a target anchor point corresponding to the annotation requirement;
an annotation algorithm generating unit (503), configured to modify (203) an implementation parameter of the target anchor point based on the annotation requirement, to generate a target annotation algorithm; and
an annotation result generating unit (504), configured to process (204) the to-be-annotated data using the target annotation algorithm, to obtain an annotation result.

8. The apparatus according to claim 7, wherein the original annotation algorithm extracting subunit comprises:
a type analyzing module, configured to analyze (301) a type of to-be-annotated data, the type comprising at least one of: image type, audio type, or text type; and
an original annotation algorithm extracting module, configured to extract (302) the original annotation algorithm from a preset algorithm database according to the type of the to-be-annotated data.

9. The apparatus according to claim 8, wherein the original annotation algorithm extracting module comprises:
a recommendation algorithm presenting submodule, configured to present one or more recommended algorithms corresponding to the type of the to-be-annotated data; and
an original annotation algorithm determining submodule, configured to determine, in response to receiving a selection on a recommended algorithm, the recommended algorithm determined by the selection as the original annotation algorithm.

10. The apparatus according to claim 7, wherein the annotation algorithm generating unit comprises:
a prompt information generating subunit, configured to acquire modifiable codes corresponding to the target anchor point, and generate prompt information of the modifiable codes, the prompt information being used to prompt a function of each part of the modifiable codes;
a modifiable content presenting subunit, configured to present the modifiable codes and the prompt information; and
a code modification subunit, configured to receive parameter modification information corresponding to the modifiable codes, and modify the modifiable codes according to the parameter modification information,
wherein the annotation algorithm generating unit is further configured to generate the target annotation algorithm according to a result after the modifiable codes in the original annotation algorithm is modified.

11. The apparatus according to claim 7, further comprising:
a data preprocessing unit, configured to perform, in response to acquiring an instruction for preprocessing the to-be-annotated data, a corresponding preprocessing operation on the to-be-annotated data according to the instruction for preprocessing, the preprocessing operation comprising at least one of: deduplication, deviation correction, or chroma adjustment.

12. The apparatus according to any one of claims 7-11, further comprising:
a function tag generating unit, configured to generate a function tag of the target annotation algorithm according to the annotation requirement; and
a relationship form generating unit, configured to generate, based on the function tag, a table recording relationships between respective target annotation algorithms corresponding to different annotation requirements and modification information in the respective target annotation algorithms relative to the original annotation algorithm.

13. A non-transitory computer readable storage medium, storing a computer instruction, wherein the computer instruction, when executed by a processor, cause the processor to perform the method for annotating data according to any one of claims 1-6.

14. A computer program product, comprising a computer program, wherein the computer program, when executed by a processor, cause the processor to perform the method for annotating data according to any one of claims 1-6.
